# EUROPÄISCHE PATENTSCHRIFT

(11) **EP 3 704 332 B1**
(45) Veröffentlichungstag und Bekanntmachung des Hinweises auf die Patenterteilung: **12.07.2023**
(21) Anmeldenummer: 17826528.6
(22) Anmeldetag: 27.12.2017
(51) Int. Cl.: E04H 12/08

(54) **VERFAHREN ZUM HERSTELLEN EINER TEILSEKTION EINER MEHRTEILIGEN TURMSEKTION**
METHOD FOR PRODUCING A SUB-SECTION OF A MULTI-PART TOWER SECTION
PROCÉDÉ DE FABRICATION D'UNE SECTION PARTIELLE D'UNE SECTION DE TOUR EN PLUSIEURS PARTIES

(30) Priorität: 03.11.2017 DE 102017125717
(43) Veröffentlichungstag der Anmeldung: 09.09.2020
(73) Patentinhaber: eno energy systems GmbH, 18055 Rostock (DE)
(72) Erfinder: PORM, Karsten, 18236 Kröpelin (DE); BOCKHOLT, Stefan, 18255 Kühlungsborn (DE); AHRENS, Robin, 18057 Rostock (DE); HEIN, Robert, 18057 Rostock (DE); BULL, Michael, 18198 Kritzmow OT Groß Schwaß (DE)
(74) Vertreter: 2SPL Patentanwälte PartG mbB
(86) Internationale Anmeldenummer: PCT/EP2017/084670
(87) Internationale Veröffentlichungsnummer: WO 2019/086136

(56) Entgegenhaltungen:
- WO-A1-2015/158349
- WO-A1-2015/161858
- DE-A1-102015 110 344
- DE-U1- 20 321 855
- US-A1- 2004 234 352

## Beschreibung

### Technisches Gebiet

Ausführungsbeispiele befassen sich mit Konzepten für Türme mit großen Höhen und insbesondere mit Verfahren zum Herstellen einer Teilsektion einer mehrteiligen Turmsektion.

### Hintergrund

Die für einen wirtschaftlichen Betrieb von On-Shore Windenergieanlagen WEA benötigten großen Nabenhöhen (z.B. >130m), erfordern für die Türme dieser WEA's in Stahlbauweise große Turmfußdurchmesser. Die Transportrahmenbedingungen (z.B. Durchfahrtshöhen) an Land beschränken die maximal möglichen Durchmesser für Turmsektionen auf 4,4 m. Eine Möglichkeit stellen Turmsektionen in längsgeteilter Bauweise dar. Diese ermöglichen Turmfußdurchmesser größer 4,4 m ohne die bestehenden Rahmenbedingungen für den Transport zu überschreiten.

Die Druckschrift DE 102015110344 A1 beschreibt einen geteilten Turmaufbau für Windenergieanlagen und Dokument WO 2015/158349 A1 offenbart die Herstellung eines Turms aus Turmsegmenten. Ferner beschreibt die Druckschrift DE 20321855 U1 einen Stahlturm für Windkraftanlagen.

### Zusammenfassung

Es besteht ein Bedarf ein Konzept für die Herstellung von Teilsektionen von mehrteiligen Turmsektionen von Türmen zu schaffen, dass eine kostengünstigere, einfachere, schnellere und/oder formgenauere Herstellung von Teilsektionen ermöglicht.

Dieser Bedarf könnte durch den Gegenstand einer der vorliegenden Ansprüche gedeckt werden.

Einige Ausführungsbeispiele beziehen sich auf ein Verfahren zum Herstellen einer Teilsektion einer mehrteiligen Turmsektion eines Turms. Das Verfahren umfasst ein teilweises Schneiden eines Ringflansches an Teilungsstellen zwischen Ringflanschteilen des Ringflansches, sodass an den Teilungsstellen zumindest Teile eines Steges des Ringflansches nach dem teilweisen Schneiden verbleiben, die die Ringflanschteile miteinander verbinden. Ferner umfasst das Verfahren ein Verbinden des Ringflansches mit einer Schale der mehrteiligen Turmsektion nach dem teilweisen Schneiden des Ringflansches und ein Trennen der Ringflanschteile an den Teilungsstellen durch Schneiden der verbleibenden Teile des Steges nach dem Verbinden des Ringflansches mit der Schale.

Einige weitere Ausführungsbeispiele beziehen sich auf ein Verfahren zum Herstellen einer Teilsektion einer mehrteiligen Turmsektion eines Turms. Das Verfahren umfasst ein Erzeugen von Ausrichtlöchern durch eine Schale der mehrteiligen Turmsektion entlang einer gewünschten Längstrennlinie der Schale und ein Ausrichten eines Längsflansches der Teilsektion an einer ersten Seite der Schale entlang der gewünschten Längstrennlinie der Schale mit Hilfe der Ausrichtlöcher oder mit Hilfe von an den Ausrichtlöchern befestigten oder durch die Ausrichtlöcher verlaufende Ausrichtstrukturen. Ferner umfasst das Verfahren ein Befestigen des Längsflansches der Teilsektion an einer Schale der Turmsektion nach dem Ausrichten des Längsflansches und ein Trennen der Schale entlang der gewünschten Längstrennlinie von einer gegenüberliegenden, zweiten Seite der Schale.

Einige weitere Ausführungsbeispiele beziehen sich auf ein Verfahren zum Herstellen einer Teilsektion einer mehrteiligen Turmsektion eines Turms. Das Verfahren umfasst ein Trennen einer Schale der mehrteiligen Turmsektion entlang von an der Schale befestigten Längsflanschen. Eine Längsachse der mehrteiligen Turmsektion liegt während des Trennens der Schale im Wesentlichen horizontal. Das Verfahren umfasst ferner ein Abheben einer nach dem Trennen oben liegenden, ersten Teilsektion der mehrteiligen Turmsektion von zumindest einer nach dem Trennen unten liegenden, zweiten Teilsektion der mehrteiligen Turmsektion und ein Rotieren der ersten Teilsektion um eine Längsachse der ersten Teilsektion, um die erste Teilsektion in Wannenlage zu bewegen. Die Längsachse der ersten Teilsektion liegt während des Rotierens der ersten Teilsektion im Wesentlichen horizontal.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
- Fig. 1: ein Flussdiagramm eines Verfahrens zum Herstellen einer Teilsektion einer mehrteiligen Turmsektion eines Turms mit teilweisen Schneiden eines Ringflansches,
- Fig. 2a-2c: eine schematische Darstellung von Teilen einer mehrteiligen Turmsektion während der Herstellung von Teilsektionen der mehrteiligen Turmsektion;
- Fig. 3: ein Flussdiagramm eines Verfahrens zum Herstellen einer Teilsektion einer mehrteiligen Turmsektion eines Turms mit einem Erzeugen von Ausrichtlöchern;
- Fig. 4a: ein Flussdiagramm eines Verfahrens zum Herstellen einer Teilsektion einer mehrteiligen Turmsektion eines Turms mit Rotieren um die Längsachse;
- Fig. 4b: eine schematische Darstellung einer Hilfsvorrichtung zum Rotieren einer Teilsektion; und
- Fig. 5: zeigt einen schematischen Querschnitt einer Windenergieanlage.

### Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B. Eine alternative Formulierung für die gleichen Kombinationen ist "zumindest eines von A und B". Das Gleiche gilt für Kombinationen von mehr als 2 Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

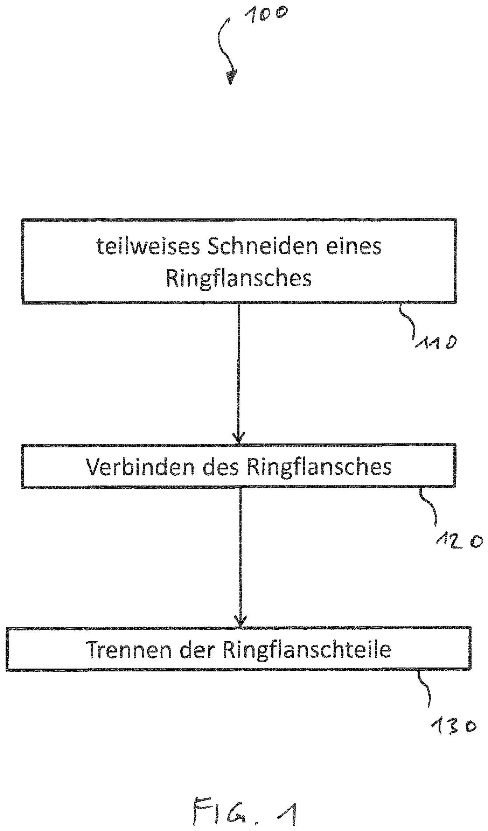

Fig. 1 zeigt ein Flussdiagramm eines Verfahrens zum Herstellen einer Teilsektion einer mehrteiligen Turmsektion eines Turms gemäß einem Ausführungsbeispiel. Das Verfahren 100 umfasst ein teilweises Schneiden 110 eines Ringflansches an Teilungsstellen zwischen Ringflanschteilen des Ringflansches, sodass an den Teilungsstellen zumindest Teile eines Steges des Ringflansches nach dem teilweisen Schneiden 110 verbleiben, die die Ringflanschteile miteinander verbinden. Ferner umfasst das Verfahren 100 ein Verbinden 120 des Ringflansches mit einer Schale der mehrteiligen Turmsektion nach dem teilweisen Schneiden 110 des Ringflansches und ein Trennen 130 der Ringflanschteile an den Teilungsstellen durch Schneiden der verbleibenden Teile des Steges nach dem Verbinden 120 des Ringflansches mit der Schale.

Durch das nur teilweise Schneiden an Stelle eines vollständigen Zerschneidens des Ringflansches in Ringflanschteile vor dem Verbinden mit der Schale der Turmsektion kann das Verbinden mit der Schale vereinfacht werden, da nur ein Bauteil statt mehrere Bauteile an der Schale zu befestigen sind. Durch die verbleibenden Teile des Steges kann beispielsweise eine ausreichende Formstabilität gewährleistet werden, um den Ringflansch mit der Schale der Turmsektion verbinden zu können. Ferner kann durch das teilweise Schneiden beispielsweise das Trennen der Teilsektion von einer oder mehreren anderen Teilsektionen der mehrteiligen Turmsektion vereinfacht werden, da nicht mehr durch den gesamten Querschnitt des Ringflansches getrennt werden muss. Dadurch könnte die Herstellung der Teilsektion vereinfacht, kostengünstiger und/oder mit verbesserter Präzession ermöglicht werden.

Das teilweise Schneiden 110 des Ringflansches kann beispielsweise durch Sägen, Brennschneiden oder Fräsen erfolgen.

Das Verbinden 120 des Ringflansches mit einer Schale der mehrteiligen Turmsektion kann durch Schweißen erfolgen.

Der Ringflansch kann zwei oder mehr Ringflanschteile umfassen, die nach dem Trennen 130 der Ringflanschteile voneinander jeweils einen Querflansch einer Teilsektion der mehrteiligen Turmsektion bilden. Eine Anzahl von Ringflanschteilen des Ringflansches kann dementsprechend einer Anzahl von Teilsektionen der mehrteiligen Turmsektion entsprechen. Der Ringflansch kann beispielsweisen einen L- oder T-förmigen Querschnitt aufweisen. Z.B. können der Steg des Ringflansches und der Flansch des Ringflansches jeweils einen Schenkel des L-förmigen Querschnitts bilden. Der Flansch des Ringflansches kann Löcher für eine spätere Verbindung mit einem Querflansch einer anderen Turmsektion oder mit einem Fundament des Turms über eine Schraubverbindung aufweisen.

Die Teilungsstellen können an jenen Positionen vorgesehen sein, an denen später auch entsprechende Längstrennlinien der Schale der Turmsektion sind. Der Ringflansch kann vor dem Verbinden 120 mit der Schale der mehrteiligen Turmsektion auf die Schale ausgerichtete werden, sodass die Trennungsstellen an den Stellen der gewünschten Längstrennlinien der Schale zu liegen kommen. Optional kann dann ein Trennen der Schale der mehrteiligen Turmsektion entlang von an der Schale befestigten Längsflanschen, die entlang der gewünschten Trennlinie verlaufen, und das Trennen der Ringflanschteile gemeinsam erfolgen (z.B. im Zuge eines gemeinsamen Sägeschnitts). Beispielsweise kann eine gleiche Blechstärke an Schale und Steg vorliegen, so dass mit dem gleichen Werkzeug (z.B. Säge) getrennt werden kann. Dadurch könnten Kosten und/oder Zeit gespart werden.

Ferner kann das Verfahren 100 optional ein Verbinden einer Schablonenstruktur mit dem Ringflansch nach dem teilweisen Schneiden 110 und vor dem Verbinden 120 des Ringflansches mit der Schale umfassen. Dadurch kann die Formstabilität des Ringflansches bis zum Verbinden 120 mit der Schale verbessert werden. Die Schablonenstruktur kann beispielsweise an den Ringflansch angeschraubt werden und nach dem Verbinden 120 des Ringflansches mit der Schale und vor dem Trennen 130 der Ringflanschteile an den Teilungsstellen wieder entfernt werden. Die Schablonenstruktur kann z.B. ein weiterer Ringflansch mit zumindest teilweise gleichem Lochbild (z.B. zumindest zwei Löcher pro Ringflanschteil), wie ein Lochbild des teilweise geschnittenen Ringflansches, sein.

Beispielsweise kann der (erste) Ringflansch mit der Schale an einer oberen Querkante der Schale verbunden werden. Ferner kann das Verfahren 100 ein Verbinden eines zweiten, teilweise geschnittenen Ringflansches mit der Schale an einer unteren Querkante der Schale nach einem teilweisen Schneiden des zweiten Ringflansches an Teilungsstellen zwischen Ringflanschteilen des zweiten Ringflansches umfassen. Dadurch kann ein Markieren einer gewünschten Längstrennlinie basierend auf den Einschnitten in den Ringflanschen erfolgen. Beispielsweise kann das Verfahren 100 ein Markieren (z.B. durch eine Farblinie) einer gewünschten Längstrennlinie der Schale die sich von einer Trennungsstelle des ersten Ringflansches zu einer gegenüberliegenden Trennungsstelle des zweiten Ringflansches erstreckt mit Hilfe der an den Trennungsstellen durch das teilweise Schneiden erzeugten Einschnitte umfassen. Die gewünschte Längstrennlinie kann an einer Innenseite der Schale (z.B. zum Befestigen von Längsflanschen) und/oder an einer Außenseite der Schale (z.B. zum Ausrichten beim Sägen) markiert werden. So kann es ermöglicht werden die gewünschte Längstrennlinie auf beiden Seiten der Schale identisch anzuzeichnen. Z.B. kann von einem Einschnitt im ersten, oberen Ringflansch eine Schnur zu einem Einschnitt im zweiten, unteren Ringflansch gespannt werden und durch die Schnur eine Farblinie auf der Innenseite der Schale und/oder an einer Außenseite der Schale erzeugt werden.

Optional kann das Verfahren 100 umfassen ein Erzeugen von Ausrichtlöchern durch die Schale der mehrteiligen Turmsektion entlang einer gewünschten Längstrennlinie der Schale und ein Ausrichten eines Längsflansches der Teilsektion an einer ersten Seite der Schale entlang der gewünschten Längstrennlinie der Schale mit Hilfe der Ausrichtlöcher oder mit Hilfe von an den Ausrichtlöchern befestigten oder durch die Ausrichtlöcher verlaufenden Ausrichtstrukturen. Ferner kann das Verfahren 100 aufweisen ein Befestigen des Längsflansches der Teilsektion an einer Schale der Turmsektion nach dem Ausrichten des Längsflansches und ein Trennen der Schale entlang der gewünschten Längstrennlinie von einer gegenüberliegenden, zweiten Seite der Schale. Dabei kann das Trennen 130 der Ringflanschteile während des Trennens der Schale erfolgen. Durch das Vorsehen von Ausrichtlöchern und optional auch Ausrichtstrukturen kann eine Genauigkeit der Ausrichtung eines Trenngeräts (z.B. Säge) auf die Längsflansche erhöht werden, obwohl das Trenngeräts und die Längsflansche auf unterschiedlichen Seiten positioniert werden. Das Trennen 340 der Schale entlang der gewünschten Längstrennlinie kann demnach optional ein Ausrichten eines Trenngeräts mit Hilfe der Ausrichtlöcher oder mit Hilfe von an den Ausrichtlöchern befestigten oder durch die Ausrichtlöcher verlaufenden Ausrichtstrukturen umfassen. Dadurch kann das Risiko einer Beschädigung des Längsflansches reduziert werden.

Beispielsweise kann eine Längsachse der mehrteiligen Turmsektion während des Trennens der Schale im Wesentlichen horizontal liegen. Ferner kann das Verfahren optional ein Abheben einer nach dem Trennen oben liegenden, ersten Teilsektion der mehrteiligen Turmsektion von zumindest einer nach dem Trennen unten liegenden, zweiten Teilsektion der mehrteiligen Turmsektion und ein Rotieren der ersten Teilsektion um eine Längsachse der ersten Teilsektion umfassen, um die erste Teilsektion in Wannenlage zu bewegen. Die Längsachse der ersten Teilsektion kann während des Rotierens der ersten Teilsektion im Wesentlichen horizontal liegen. Dadurch kann beispielsweise ein Platz und/oder Krankapazitäten, die zum Umdrehen der Teilsektion benötigt werden, im Vergleich zu einem Drehen um eine zur Längsachse orthogonalen Querachse deutlich reduziert werden.

Der zu errichtende Turm umfasst beispielsweise eine Mehrzahl von Turmsektionen von denen zumindest eine Turmsektion oder zumindest zwei übereinander anzuordnende Turmsektionen mehrteilig sind. Eine Turmsektion ist beispielsweise ein Teil eines Turms, der einen Höhenabschnitt des Turms bildet. Eine Turmsektion ist z.B. ein Teil eines Turms, der eine Symmetrie bezüglicher einer im errichteten Zustand des Turms im Wesentlichen vertikalen Längsachse des Turms aufweist. Beispielsweise kann die Turmsektion (z.B. die Schale der Turmsektion) eine zylindermantelförmige oder kegelstumpfmantelförmige Geometrie aufweisen. Die Längsachse der Turmsektion oder des Turms kann beispielsweise eine Symmetrieachse der Schale der Turmsektion oder des Turms sein.

Die mehrteilige Turmsektion des zu errichtenden Turms weist zumindest zwei Teilsektionen auf. Ferner umfasst die mehrteilige Turmsektion beispielsweise weniger als 9 oder weniger als 5 Teilsektionen. Beispielsweise kann ein Durchmesser der mehrteiligen Turmsektion größer als 4m (oder größer als 5m, größer als 6m oder größer als 8m) sein.

Die Teilsektionen der mehrteiligen Turmsektion werden beispielsweise bei der Trennung einer Schale der Turmsektion in kleinere Teile erzeugt. Beispielsweise umfasst jede Teilsektion ein Segment der Schale der Turmsektion. Die Schalensegmente sind beispielsweise kegelstumpfmantelsegmentförmig (Geometrie eines Teils einer Mantelfläche eines Kegelstumpfes) oder zylindermantelsegmentförmig (Geometrie eines Teils einer Mantelfläche eines Zylinders). Ferner sind die Schalensegmente der Teilsektion z.B. Stahlschalensegment.

Das Schalensegment der Teilsektion umfasst beispielsweise zwei sich im Wesentlichen horizontal (oder orthogonal zu einer Turmachse oder Symmetrieachse der Turmsektion) erstreckende Querseiten oder Querkanten und zwei sich im Wesentlich orthogonal zu den Querseiten (z.B. im Wesentlichen vertikal oder in Richtung der Turmachse) erstreckende Längsseiten oder Längskanten. Die Längsseiten können z.B. für hohlzylinderförmige Turmsektionen im Wesentlichen parallel zu der Längsachse des Turms oder der Turmsektion sein oder von der parallelen Richtung für hohlkegelstumpfförmige Turmsektionen leicht abweichen (z.B. weniger als 5°, weniger als 3° oder weniger als 1°). Das Schalensegment der Teilsektion ist beispielsweise Teil der Außenschale des Turms und kann z.B. aus Stahl gefertigt sein. Eine Querkante der Teilsektion und/oder eine Querkante des Schalensegments der Teilsektion kann beispielsweise eine Länge von mehr als 2,5 m (oder mehr als 5 m oder mehr als 8 m) aufweisen. Die Querkante entspricht beispielsweise der kreisbogenförmigen Kante am oberen oder unteren Ende einer Teilsektion und/oder am oberen oder unteren Ende des Schalensegments einer Teilsektion und die Länge der Querkante entspricht z.B. einer Länge der kreisbogenförmigen Kante. Die Längskante des Schalensegments der Teilsektion kann z.B. eine Länge von mehr als 5 m (oder mehr als 10 m oder mehr als 20 m) aufweisen.

Entsprechend kann beispielsweise die Teilsektion eine Höhe von mehr als 5m (oder mehr als 10 m oder mehr als 20 m) aufweisen. Das Schalensegment der Teilsektion kann beispielsweise eine Dicke von mehr als 20 mm (oder mehr als 30 mm oder mehr als 40 mm) aufweisen.

Die Teilsektion umfasst beispielsweise einen Längsflansch entlang jeder der beiden Längskanten des Schalensegments der Teilsektion. Die Längsflansche sind beispielsweise entlang der Längskanten, z.B. angrenzend an die Längskanten, befestigt (z.B. durch zumindest eine Schweißnaht). Die Längsflansche können an einer Außenseite oder an einer Innenseite des Schalensegments der Teilsektion befestigt sein.

Beispielsweise können sich die Längsflansche der Teilsektion über die gesamten Längskanten der Schalensegmente der Teilsektion erstrecken. Alternativ kann ein Längsflansch kürzer als die Längskante eines Schalensegments sein, sodass sich zumindest an den Enden der Längskante kein Längsflansch erstreckt (z.B. entlang zumindest der letzten 10 cm, zumindest der letzten 30 cm oder zumindest der letzten 50 cm). Dadurch kann z.B. die Befestigung eines Querflansches entlang einer Querkante des Schalensegments der Teilsektionen erleichtert werden.

Die Teilsektion umfasst beispielsweise jeweils einen Querflansch entlang der beiden Querkanten des Schalensegments der Teilsektion. Die Querflansche entsprechen beispielsweise jeweils einem Ringflanschteil eines oberen und eines unteren Ringflansches. Die Querflansche sind beispielsweise kreissegmentförmig und entlang der Querkanten des Schalensegments der Teilsektion befestigt. Beispielsweise kann an einer oberen Querkante des Schalensegments ein oberer Querflansch und an einer unteren Querkante des Schalensegments ein unterer Querflansch befestigt sein. Der Querflansch kann verwendet werden, um die Teilsektion mit einer anderen Turmsektion, einer Teilsektion einer anderen Turmsektion oder einem Fundament des Turms zu verbinden (z.B. über Schraubverbindungen).

Als Turm wird z.B. ein vertikal ausgerichtetes Bauwerk bezeichnet, beispielsweise für eine Windenergieanlage. Die Definition eines Turms enthält sowohl abgespannte als auch freistehende Konstruktionen und berücksichtigt somit auch Konstruktionen, die manchmal auch als Mast bezeichnet werden. Beispielsweise kann der Turm ein Turm einer Windenergieanlage sein.

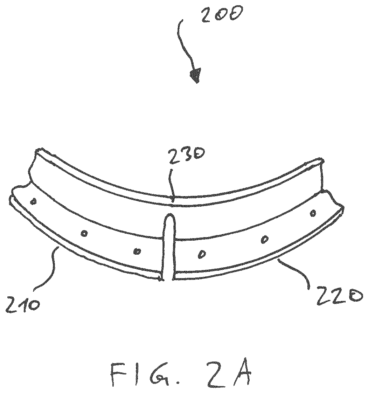

Fig. 2a-2c zeigen schematische Darstellungen von Teilen einer mehrteiligen Turmsektion während der Herstellung von Teilsektionen der mehrteiligen Turmsektion gemäß einem Ausführungsbeispiel. Die Teilsektionen der mehrteiligen Turmsektion können beispielsweise ähnlich dem in Zusammenhang mit Fig. 1 beschriebenen Verfahren hergestellt werden.

Fig. 2a zeigt einen Ringflansch 200 nach einem teilweisen Teilen an einer Teilungsstelle zwischen einem ersten Ringflanschteil 210 und einem zweiten Ringflanschteil 220, sodass zwischen den beiden Ringflanschteilen ein Teil 230 eines Steges des Ringflansches verbleibt.

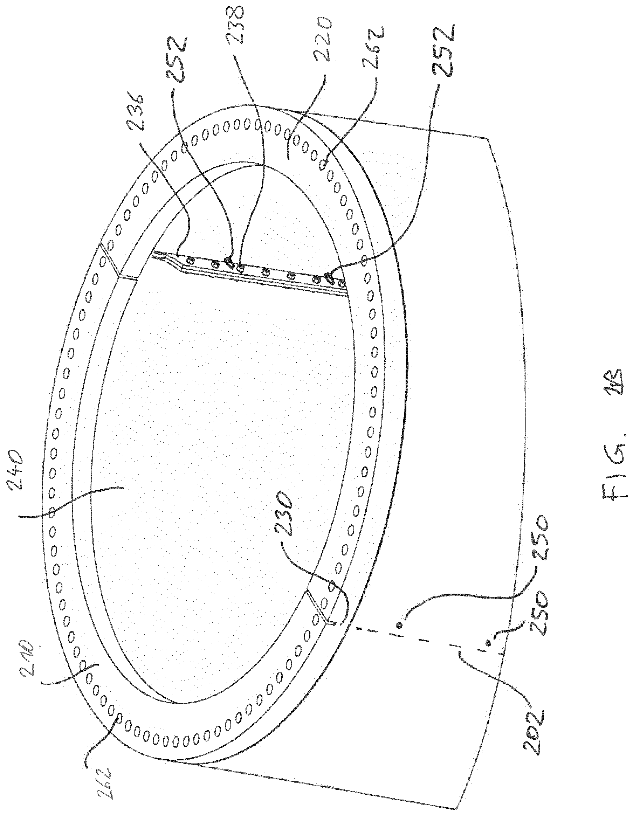

Fig. 2b zeigt die beiden Ringflanschteile 210, 220 nach dem Verbinden mit einer Schale 240 der mehreiligen Turmsektion. Der Ringflansch weist Löcher 262 für eine Schraubverbindung auf. Ferner sind entlang von gewünschten Längstrennlinien 202 jeweils zwei Längsflansche 236 angebracht, die über Schraubverbindungen 238 miteinander verbunden sind. Die Längsflansche 236 sind an Ausrichtlöchern 250 befestigten oder an durch die Ausrichtlöcher verlaufenden Ausrichtstrukturen 252 ausgerichtet.

Die Ausrichtlöcher können, wie in Fig. 2b gezeigt, neben der gewünschten Längstrennlinie 202 angeordnet sein, sodass die Längsflansche an Ausrichthilfen 252, die an den Ausrichtlöchern 250 befestigt sind, angelegt werden und dann an die Schale angeschweißt werden.

Alternativ können die Ausrichtlöcher so positioniert sein, dass die gewünschte Längstrennlinie 202 durch die Ausrichtlöcher verläuft, die Ausrichtlöcher also auf der gewünschten Längstrennlinie 202 liegen, sodass die Löcher beim Trennen der Turmsektionsschale entfernt werden.

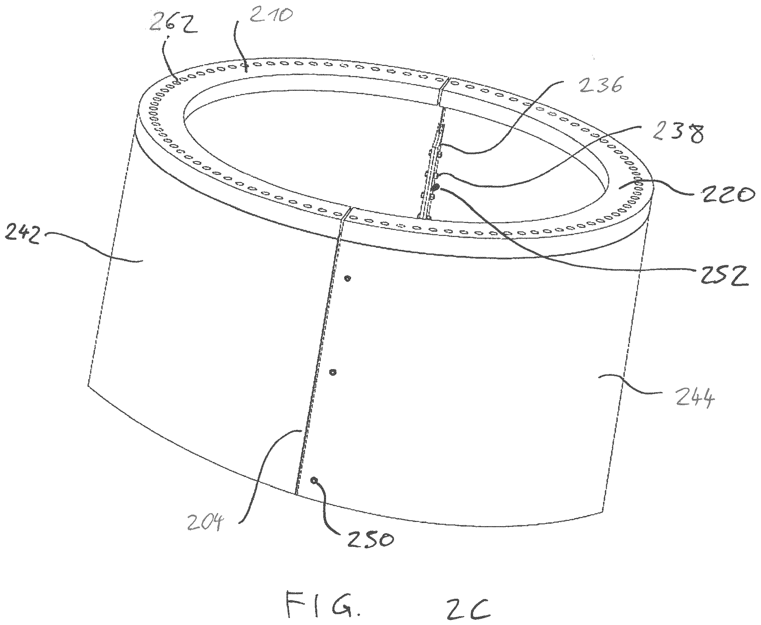

Fig. 2c zeigt eine erste Teilsektion 242 und eine zweite Teilsektion 244 nach dem Trennen der Schale der Turmsektion und dem Trennen der nach dem teilweisen Trennen des Ringflansches verbliebenen Teile des Steges des Ringflansches.

Weitere Einzelheiten und optionale Aspekte des in den Fig. 2a-2c gezeigten Verfahrens sind in Verbindung mit dem vorgeschlagenen Konzept oder einem oder mehreren der zuvor oder im Folgenden beschriebenen Beispiele beschrieben.

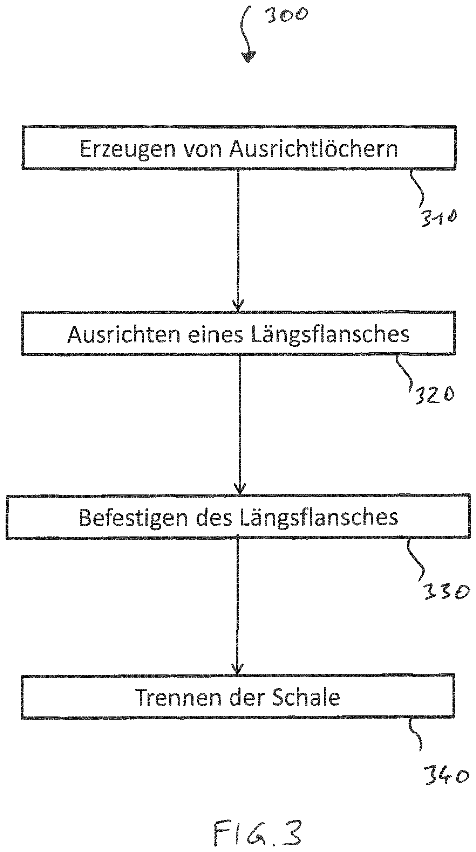

Fig. 3 zeigt ein Flussdiagramm eines Verfahrens zum Herstellen einer Teilsektion einer mehrteiligen Turmsektion eines Turms gemäß einem Ausführungsbeispiel. Das Verfahren 300 umfasst ein Erzeugen 310 von Ausrichtlöchern durch eine Schale der mehrteiligen Turmsektion entlang einer gewünschten Längstrennlinie der Schale und ein Ausrichten 320 eines Längsflansches der Teilsektion an einer ersten Seite der Schale entlang der gewünschten Längstrennlinie der Schale mit Hilfe der Ausrichtlöcher oder mit Hilfe von an den Ausrichtlöchern befestigten oder durch die Ausrichtlöcher verlaufende Ausrichtstrukturen. Ferner umfasst das Verfahren ein Befestigen 330 des Längsflansches der Teilsektion an einer Schale der Turmsektion an der ersten Seite der Schale nach dem Ausrichten des Längsflansches und ein Trennen 340 der Schale entlang der gewünschten Längstrennlinie von einer gegenüberliegenden, zweiten Seite der Schale.

Durch das Vorsehen von Ausrichtlöchern und optional auch Ausrichtstrukturen kann eine Genauigkeit der Ausrichtung einer Trennvorrichtung (z.B. Säge) auf die Längsflansche erhöht werden, obwohl die Trennvorrichtung und die Längsflansche auf unterschiedlichen Seiten der Turmschale positioniert werden. Dadurch kann das Risiko einer Beschädigung des Längsflansches reduziert werden.

Das Trennen 340 der Schale entlang der gewünschten Längstrennlinie kann beispielsweise durch ein Aufsetzen einer Säge auf eine Außenseite der Schale und ein Sägen von der Außenseite erfolgen während die Längsflansche der Teilsektionen an einer Innenseite der Schale angeordnet sind. Das Trennen 340 der Schale entlang der gewünschten Längstrennlinie kann beispielsweise ein Ausrichten eines Trenngeräts mit Hilfe der Ausrichtlöcher oder mit Hilfe von an den Ausrichtlöchern befestigten oder durch die Ausrichtlöcher verlaufenden Ausrichtstrukturen umfassen.

Die Ausrichtlöcher können beispielsweise durch ein Bohren von Bohrlöchern durch die Schale erzeugt werden. Die Ausrichtlöcher können so positioniert sein, dass die gewünschte Längstrennlinie durch die Ausrichtlöcher verläuft, die Ausrichtlöcher also auf der gewünschten Längstrennlinie liegen, sodass die Löcher beim Trennen der Turmsektionsschale entfernt werden. Wenn die Ausrichtlöcher in der Trennebene liegen, könnte beispielsweise vermieden werden, dass die Löcher im tragenden Teil des Mantels liegen und/oder die Löcher versiegelt werden müssten.

Optional kann das Verfahren 300 ein Befestigen von Ausrichtstrukturen an den Ausricht löchern umfassen. Die Ausrichtstrukturen können z.B. Stahlstifte oder Kunststoffstifte sein. Ein Abstand zwischen benachbarten Ausrichtlöcher entlang der gewünschten Längstrennlinie kann beispielsweise größer als 10 cm (oder größer als 20cm oder größer als 50cm) und/oder kleiner als 2m (oder kleiner als 1,5m oder kleiner als 1m) sein.

Das Verfahren 300 kann ferner ein lösbares Verbinden (z.B. durch eine Schraubenverbindung) eines Längsflansches einer zweiten Teilsektion der Turmsektion mit dem Längsflansch der ersten Teilsektion nach dem Befestigen des Längsflansches der ersten Teilsektion an der Schale der mehrteiligen Turmsektion umfassen, sodass die beiden benachbarten Längsflansche entlang einer Kontaktfläche direkt miteinander in Kontakt sind. Zusätzlich kann das Verfahren 300 ein Befestigen (z.B. durch Schweißen) des Längsflansches der zweiten Teilsektion an der Schale der mehrteiligen Turmsektion nach dem lösbaren Verbinden des Längsflansches der zweiten Teilsektion mit dem Längsflansch der ersten Teilsektion umfassen.

Weitere Einzelheiten und optionale Aspekte des Verfahrens 300 sind in Verbindung mit dem vorgeschlagenen Konzept oder einem oder mehreren der zuvor oder im Folgenden beschriebenen Beispiele beschrieben.

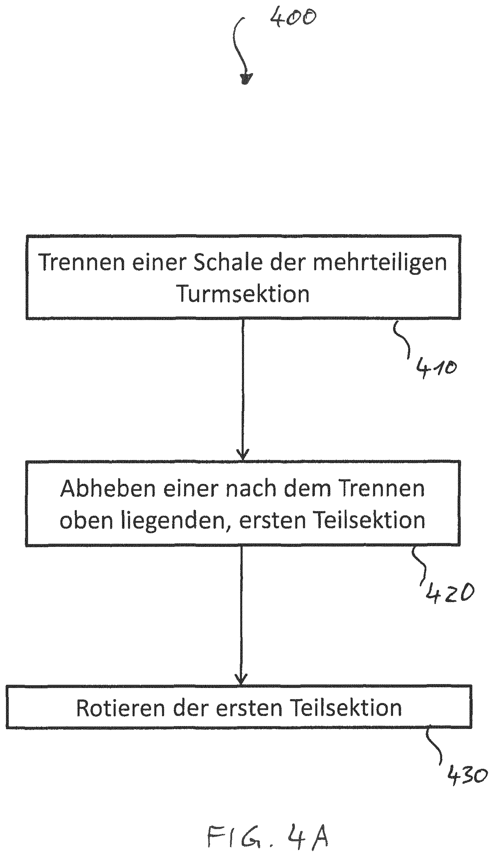

Fig. 4a zeigt ein Flussdiagramm eines Verfahrens zum Herstellen einer Teilsektion einer mehrteiligen Turmsektion eines Turms gemäß einem Ausführungsbeispiel. Das Verfahren 400 umfasst ein Trennen 410 einer Schale der mehrteiligen Turmsektion entlang von an der Schale befestigten Längsflanschen. Eine Längsachse der mehrteiligen Turmsektion liegt während des Trennens der Schale im Wesentlichen horizontal. Das Verfahren 400 umfasst ferner ein Abheben 420 einer nach dem Trennen oben liegenden, ersten Teilsektion der mehrteiligen Turmsektion von zumindest einer nach dem Trennen unten liegenden, zweiten Teilsektion der mehrteiligen Turmsektion und ein Rotieren 430 der ersten Teilsektion um eine Längsachse der ersten Teilsektion, um die erste Teilsektion in Wannenlage zu bewegen. Die Längsachse der ersten Teilsektion liegt während des Rotierens der ersten Teilsektion im Wesentlichen horizontal.

Durch das Rotieren um die Längsachse kann beispielsweise ein Platz und/oder Krankapazitäten, die zum Umdrehen der Teilsektion benötigt werden, im Vergleich zu einem Drehen um eine zur Längsachse orthogonalen Querachse deutlich reduziert werden.

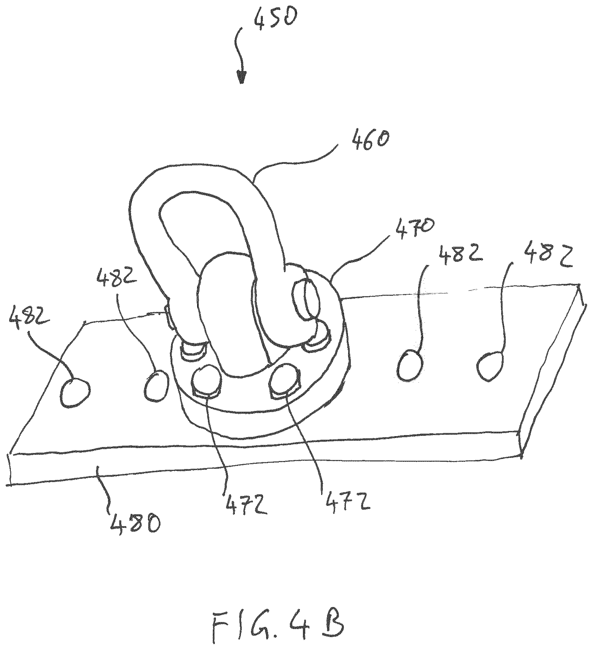

Zum Rotieren 430 um die Längsachse kann beispielsweise eine Hilfsvorrichtung (z.B. Fig. 4b) verwendete werden, die ein Kippen um den Schwerpunkt der Teilsektion beim Rotieren 430 der Teilsektion verhindert. Dadurch kann beispielsweise Beschädigung oder Gefährdung von Arbeitern beim Rotieren reduziert oder vermieden werden.

Die Längsachse der mehrteiligen Turmsektion entspricht beispielsweise bis zum Abheben 420 der nach dem Trennen oben liegenden, ersten Teilsektion der Längsachse der Teilsektion. Die Längsachse der mehrteiligen Turmsektion und/oder die Längsachse der Teilsektion liegt im Wesentlichen horizontal, wenn ein Winkel zwischen einer horizontalen Richtung und der Längsachse der mehrteiligen Turmsektion und/oder der Längsachse der Teilsektion kleiner als 10° (oder kleiner als 5° oder kleiner als 2°) ist.

Das Verfahren 400 kann beispielsweise ferner ein Schweißen eines Längsflansches der ersten Teilsektion an die Schale der mehrteiligen Turmsektion entlang einer ersten Seite des Längsflansches vor dem Trennen 410 der Schale und ein Schweißen des Längsflansches der ersten Teilsektion an das Schalensegment der ersten Teilsektion entlang einer gegenüberliegenden, zweiten Seite des Längsflansches nach dem Rotieren 430 der ersten Teilsektion umfassen. Dadurch kann ein Schweißen der zweiten Seite des Längsflansches von oben erfolgen und ein Überkopf-Schweißen vermieden werden.

Weitere Einzelheiten und optionale Aspekte des Verfahrens 400 sind in Verbindung mit dem vorgeschlagenen Konzept oder einem oder mehreren der zuvor oder im Folgenden beschriebenen Beispiele beschrieben.

Fig. 4b zeigt eine schematische Darstellung einer Hilfsvorrichtung zum Rotieren einer Teilsektion gemäß einem Ausführungsbeispiel. Die Hilfsvorrichtung 450 umfasst einen Schäkel 460, der auf einer Grundplatte 470 befestigt ist. Die Grundplatte 470 ist über Schrauben 472 auf einer Adapterplatte 480 befestigt. Die Adapterplatte 480 weist Löcher 482 auf, die ein Lochbild aufweisen, das zumindest teilweise einem Lochbild eines Querflansches einer Teilsektion eines Turms entspricht.

Die Hilfsvorrichtung 450 kann über die Adapterplatte 480 mit dem Querflansch der Teilsektion verschraubt werden und vor dem Rotieren der Teilsektion über den Schäkel mit einem Kran oder einer Haltevorrichtung verbunden werden, sodass ein Kippen um den Schwerpunkt der Teilsektion beim Rotieren der Teilsektion verhindert werden kann.

Einige Ausführungsbeispiele beziehen sich auf eine Windenergieanlage mit einem Turm mit zumindest einer mehrteiligen Turmsektion mit einer Teilsektion hergestellt nach einem der zuvor oder nachfolgend beschriebenen Beispiele.

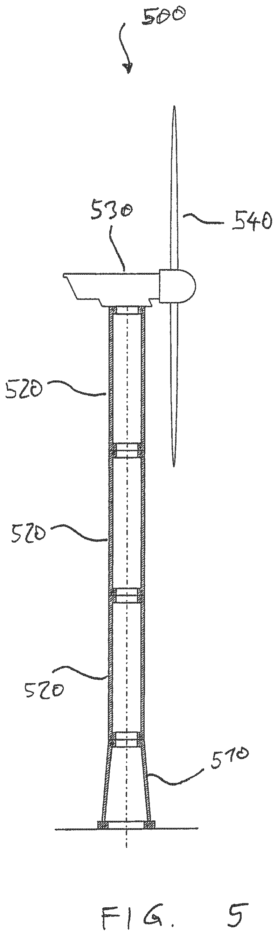

Fig. 5 zeigt einen schematischen Querschnitt einer Windenergieanlage 500 entsprechend einem Ausführungsbeispiel. Die Windenergieanlage 500 umfasst einen Turm und ein Maschinenhaus 530 mit angeschlossenem Rotor 540. Der Turm umfasst eine hohlkegelstumpfförmige untere Turmsektion 510 und drei hohlzylindrische obere Turmsektion 520. Zumindest die untere Turmsektion 510 umfasst zumindest zwei Teilsektionen, wie sie mit dem beschriebenen Konzept oder in Zusammenhang mit einem oder mehreren der vorhergehend oder nachfolgend beschriebenen Ausführungsbeispiele (z.B. Fig. 1-4) beschrieben wurden.

Einige Aspekte des vorgeschlagenen Konzepts beziehen sich auf die Fertigung mindestens einer längsgeteilten Turmteilsektion und insbesondere auf die Montage der Ringflansche. Beispielsweise kann zuerst der Ringflansche durch Trennen des Gurtes bis zum Steg mittels Sägeschnitt Brennschnitt oder Fräsen vorbereitet werden. Der Steg bleibt dabei beispielsweise intakt. Danach kann der vorbereitete Ringflansch gegen einen Ringflansch oder Ringflanschsegmente gleichen Durchmessers und Lochbildes geschraubt werden. Die Verbindung kann dabei über alle Bohrungen, jede zweite Bohrung oder über in einem festen symmetrischen oder unsymmetrischen Intervall ausgewählte Bohrungen erfolgen. Anschließend kann der vorbereitete Ringflansch an ein Schalenelement eines Turmsegmentes geschweißt werden.

Einige Aspekte des vorgeschlagenen Konzepts beziehen sich auf die Montage der Längsflansche. Beispielsweise kann nach dem Schweißen der Turmsegmente und der vorbereiteten Ringflansche das Ausrichten, Heften und Schweißen der Längsflansche erfolgen. Ein erster Längsflansch kann an der späteren Trennlinie auf der Turminnenwand der geteilten Sektion ausgerichtet, geheftet und anschließend geschweißt werden. Der Längsflansch kann dabei mehrere Teile aufweisen, die einzeln montiert werden, oder mehrere Teile aufweisen, die zuvor zu einem durchgehenden Längsflansch verbunden wurden und dann montiert werden. Das Ausrichten kann über eine Ausrichthilfe in Form von Durchgangsbohrungen mit einem festen oder alternierenden Abstand zwischen 50 - 100 cm erfolgen. In den Durchgangsbohrungen können Stifte aus Stahl oder Kunststoff als Anschlagpunkte für die Längsflansche vorgesehen werden. Der ausgerichtete Längsflansch kann einseitig oder beidseitig geheftet werden. Der ein- oder beidseitig geheftete Längsflansch kann im Falle der Montage einzelner Teilsegmente anschließend zu einem durchgehenden Längsflansch verbunden werden. Das Verbinden kann mittels schweißen erfolgen. Anschließend kann der verbundene Längsflansch einseitig oder beidseitig mit der Turminnenwand verschweißt werden. Das Schweißen kann dabei in bestimmten Schweißfolgen (z.B. Pilgerschrittverfahren) mittels Metallschutzgasschweißen oder Unterpulverschweißen erfolgen. Der 2. Längsflansch kann gegen den 1. Längsflansch geschraubt werden. Der 2. Längsflansch kann analog zum ersten Längsflansch ausgerichtet, geheftet und anschließend geschweißt werden, jedoch nur einseitig (Außenseite) mit der Turmschale verbunden werden. Die Turmsektion kann entlang ihrer Längsachse in mindestens 2 Turmteilsektionen getrennt (z.B. gesägt) werden. Hierfür können min. 2 Trennschnitte verwendet werden, die gemäß dem Aspekt der Montage der Ringflansche vorbereiteten Ringflansche können in diesem Zuge ebenfalls getrennt werden. Danach können die Schrauben der Längsflansche gelöst und entfernt werden. Eine Turmteilsektion kann dann abgehoben und separat gelagert werden. Die jetzt zugängliche, noch nicht geschweißte, Innenlage des 2. Längsflansches kann, wie zuvor beschrieben, geschweißt werden. Die angehobene Turmteilsektion kann wieder mit den weiteren n-1 Turmteilsektionen mittels der Schraubverbindungen der Längsflansche verbunden werden. Das Lösen der Schraubverbindungen, abheben einer Teilsektion und Schweißen der Innenlage der 2. Längsflansche kann entsprechend der Anzahl der Teilsektionen der mehrteiligen Turmsektion wiederholt werden.

Einige Aspekte des vorgeschlagenen Konzepts beziehen sich auf geteilte Einbauten. Beispielsweise kann ein werksseitiger Einbau von auf die Teilschale angepassten Einbauten inkl. Wartungsleitern entlang der Längstrennebene der Turmteilsektion zur Verbindung der Längsflansche bei der senkrechten Errichtung erfolgen. Die Ausgestaltung der Einbauten kann derart sein, dass die senkrechte Montage mithilfe einer mobilen Arbeitsbühne im Turminneren erfolgen kann. Ferner kann ein werkseitiger Einbau von Versteifungselementen in den Turmteilsektionen erfolgen, welche derart ausgestaltet sein können, dass sie eine senkrechte Errichtung der Turmteilsektionen ermöglichen (z.B. keine Kollision einzelner am Längsflansch angebrachter Versteifungselemente während der senkrechten Montage). Einige Aspekte des vorgeschlagenen Konzepts beziehen sich auf die Handhabung in der Fertigung. Beispielsweise kann ein Drehen einer Turmteilsektion um die Längsachse mittels einer Hilfsvorrichtung, welche das Kippen um den Schwerpunkt verhindert, erfolgen. Einige Aspekte des vorgeschlagenen Konzepts beziehen sich auf das Trennverfahren oder Sägeverfahren. Beispielsweise kann eine Ausstattung der Säge mit einer Bereifung / Rollen sowie Antrieb erfolgen, so dass diese eigenständig auf der Turmschale verfahren kann. Dadurch könnte vermieden werden, dass bei der eingesetzten Säge immer der Hallenkran benötigt wird, um die Säge samt Arbeitsbühne nach ihrer Schnittlänge von bspw. 2,5m umzusetzen, was den Hallenkran während des Trennvorganges blockieren würde.

Durch die Beschreibung und Zeichnungen werden nur die Grundsätze der Offenbarung dargestellt. Weiterhin sollen alle hier aufgeführten Beispiele grundsätzlich ausdrücklich nur Lehrzwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben deren Entsprechungen umfassen.

Ein als "Mittel zum..." Ausführen einer bestimmten Funktion bezeichneter Funktionsblock kann sich auf eine Schaltung beziehen, die ausgebildet ist zum Ausführen einer bestimmten Funktion. Somit kann ein "Mittel für etwas" als ein "Mittel ausgebildet für oder geeignet für etwas" implementiert sein, z. B. ein Bauelement oder eine Schaltung ausgebildet für oder geeignet für die jeweilige Aufgabe.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

## Patentansprüche

1. Verfahren (100) zum Herstellen einer Teilsektion einer mehrteiligen Turmsektion eines Turms, wobei das Verfahren umfasst:
ein teilweises Schneiden (110) eines Ringflansches an Teilungsstellen zwischen Ringflanschteilen des Ringflansches, sodass an den Teilungsstellen zumindest Teile eines Steges des Ringflansches nach dem teilweisen Schneiden (110) verbleiben, die die Ringflanschteile miteinander verbinden;
ein Verbinden (120) des Ringflansches mit einer Schale der mehrteiligen Turmsektion nach dem teilweisen Schneiden (110) des Ringflansches; und
ein Trennen (130) der Ringflanschteile an den Teilungsstellen durch Schneiden der verbleibenden Teile des Steges nach dem Verbinden (120) des Ringflansches mit der Schale.

2. Verfahren gemäß Anspruch 1, ferner umfassend ein Trennen der Schale der mehrteiligen Turmsektion entlang von an der Schale befestigten Längsflanschen (236), wobei das Trennen (130) der Ringflanschteile im Zuge des Trennens der Schale erfolgt.

3. Verfahren gemäß einem der vorhergehenden Ansprüche, ferner umfassend ein Verbinden einer Schablonenstruktur mit dem Ringflansch nach dem teilweisen Schneiden (110) und vor dem Verbinden (120) des Ringflansches mit der Schale.

4. Verfahren gemäß Anspruch 3, wobei die Schablonenstruktur ein weiterer Ringflansch mit zumindest teilweise gleichem Lochbild, wie ein Lochbild des teilweise geschnittenen Ringflansches, ist.

5. Verfahren gemäß einem der vorhergehenden Ansprüche, ferner umfassend:
ein Erzeugen (310) von Ausrichtlöchern durch die Schale der mehrteiligen Turmsektion entlang einer gewünschten Längstrennlinie der Schale;
ein Ausrichten (320) eines Längsflansches (236) der Teilsektion an einer ersten Seite der
Schale entlang der gewünschten Längstrennlinie der Schale mit Hilfe der Ausrichtlöcher oder mit Hilfe von an den Ausrichtlöchern befestigten oder durch die Ausrichtlöcher verlaufenden Ausrichtstrukturen;
ein Befestigen (330) des Längsflansches der Teilsektion an einer Schale der Turmsektion nach dem Ausrichten des Längsflansches; und
ein Trennen (340) der Schale entlang der gewünschten Längstrennlinie von einer gegenüberliegenden, zweiten Seite der Schale, wobei das Trennen (130) der Ringflanschteile im Zuge des Trennens der Schale erfolgt.

6. Verfahren gemäß einem der vorhergehenden Ansprüche, ferner umfassend:
ein Trennen (410) der Schale der mehrteiligen Turmsektion entlang von an der Schale befestigten Längsflanschen, wobei das Trennen (130) der Ringflanschteile im Zuge des Trennens der Schale erfolgt, wobei eine Längsachse der mehrteiligen Turmsektion während des Trennens (410) der Schale im Wesentlichen horizontal liegt;
ein Abheben (420) einer nach dem Trennen (410) oben liegenden, ersten Teilsektion der mehrteiligen Turmsektion von zumindest einer nach dem Trennen unten liegenden, zweiten Teilsektion der mehrteiligen Turmsektion; und
ein Rotieren (430) der ersten Teilsektion um eine Längsachse der ersten Teilsektion, um die erste Teilsektion in Wannenlage zu bewegen, wobei die Längsachse der ersten Teilsektion während des Rotierens (430) der ersten Teilsektion im Wesentlichen horizontal liegt.

7. Verfahren gemäß einem der vorhergehenden Ansprüche, wobei der Ringflansch mit der Schale an einer oberen Querkante der Schale verbunden wird, wobei das Verfahren ferner umfasst:
ein Verbinden eines zweiten, teilweise geschnittenen Ringflansches mit der Schale an einer unteren Querkante der Schale nach einem teilweisen Schneiden des zweiten Ringflansches an Teilungsstellen zwischen Ringflanschteilen des zweiten Ringflansches; und
ein Markieren einer gewünschten Längstrennlinie der Schale die sich von einer Trennungsstelle des ersten Ringflansches zu einer gegenüberliegenden Trennungsstelle des zweiten Ringflansches erstreckt mit Hilfe der an den Trennungsstellen durch das teilweise Schneiden erzeugten Einschnitte.

8. Verfahren (300) zum Herstellen einer Teilsektion einer mehrteiligen Turmsektion eines Turms, wobei das Verfahren umfasst:
ein Erzeugen (310) von Ausrichtlöchern (250) durch eine Schale der mehrteiligen Turmsektion entlang einer gewünschten Längstrennlinie (202) der Schale;
ein Ausrichten (320) eines Längsflansches der Teilsektion an einer ersten Seite der Schale entlang der gewünschten Längstrennlinie der Schale mit Hilfe der Ausrichtlöcher oder mit Hilfe von an den Ausrichtlöchern befestigten oder durch die Ausrichtlöcher verlaufenden Ausrichtstrukturen;
ein Befestigen (330) des Längsflansches der Teilsektion an der Schale der Turmsektion nach dem Ausrichten des Längsflansches; und
ein Trennen (340) der Schale entlang der gewünschten Längstrennlinie von einer gegenüberliegenden, zweiten Seite der Schale.

9. Verfahren gemäß Anspruch 8, wobei das Trennen (340) der Schale entlang der gewünschten Längstrennlinie ein Ausrichten eines Trenngeräts mit Hilfe der Ausrichtlöcher oder mit Hilfe von an den Ausrichtlöchern befestigten oder durch die Ausrichtlöcher verlaufenden Ausrichtstrukturen umfasst.

10. Verfahren gemäß einem der Ansprüche 8 bis 9, wobei die Ausrichtlöcher Bohrlöcher sind, die sich durch die Schale erstrecken.

11. Verfahren gemäß einem der Ansprüche 8 bis 10, ferner umfassend Befestigen von Ausrichtstrukturen an den Ausrichtlöchern.

12. Verfahren gemäß einem der Ansprüche 8 bis 11, wobei die Ausrichtstrukturen Stahlstifte oder Kunststoffstifte sind.

13. Verfahren gemäß einem der Ansprüche 8 bis 12, wobei ein Abstand zwischen benachbarten Ausrichtlöcher entlang der gewünschten Längstrennlinie größer als 10 cm und kleiner als 2m ist.

14. Verfahren gemäß einem der Ansprüche 8 bis 13, ferner umfassend:
lösbares Verbinden eines Längsflansches einer zweiten Teilsektion der Turmsektion mit dem Längsflansch der ersten Teilsektion nach dem Befestigen (330) des Längsflansches der ersten Teilsektion an der Schale der mehrteiligen Turmsektion, sodass die beiden benachbarten Längsflansche entlang einer Kontaktfläche direkt miteinander in Kontakt sind; und
Befestigen des Längsflansches der zweiten Teilsektion an der Schale der mehrteiligen Turmsektion nach dem lösbaren Verbinden des Längsflansches der zweiten Teilsektion mit dem Längsflansch der ersten Teilsektion.

15. Verfahren (400) zum Herstellen einer Teilsektion einer mehrteiligen Turmsektion eines Turms, wobei das Verfahren umfasst:
ein Trennen (410) einer Schale der mehrteiligen Turmsektion entlang von an der Schale befestigten Längsflanschen, wobei eine Längsachse der mehrteiligen Turmsektion während des Trennens der Schale im Wesentlichen horizontal liegt;
ein Abheben (420) einer nach dem Trennen (410) oben liegenden, ersten Teilsektion der mehrteiligen Turmsektion von zumindest einer nach dem Trennen (410) unten liegenden, zweiten Teilsektion der mehrteiligen Turmsektion; und
ein Rotieren (430) der ersten Teilsektion um eine Längsachse der ersten Teilsektion, um die erste Teilsektion in Wannenlage zu bewegen, wobei die Längsachse der ersten Teilsektion während des Rotierens (430) der ersten Teilsektion im Wesentlichen horizontal liegt.

## Claims

1. A method (100) for producing a partial section of a multi-part tower section of a tower, the method comprising:
partially cutting (110) an annular flange at dividing locations between annular flange parts of the annular flange, so that at least parts of a web of the annular flange remain at the dividing locations after partially cutting (110), which connect the annular flange parts with one another;
connecting (120) the annular flange to a shell of the multi-part tower section after partially cutting (110) the annular flange; and
separating (130) the annular flange parts at the dividing locations by cutting the remaining parts of the web after connecting (120) the annular flange to the shell.

2. The method of claim 1, further comprising separating the shell of the multi-part tower section along longitudinal flanges (236) fastened to the shell, wherein separating (130) the annular flange parts occurs in the course of separating the shell.

3. The method of any one of the preceding claims, further comprising connecting a template structure to the annular flange after partially cutting (110) and prior to connecting (120) the annular flange to the shell.

4. The method of claim 3, wherein the template structure is another annular flange having at least partially the same hole pattern as a hole pattern of the partially cut annular flange.

5. The method of any one of the preceding claims, further comprising:
creating (310) alignment holes through the shell of the multi-part tower section along a desired longitudinal separation line of the shell;
aligning (320) a longitudinal flange (236) of the partial section at a first side of the shell along the desired longitudinal separation line of the shell using the alignment holes or using alignment structures fastened to the alignment holes or extending through the alignment holes;
fastening (330) the longitudinal flange of the partial section to a shell of the tower section after aligning the longitudinal flange; and
separating (340) the shell along the desired longitudinal separation line from an opposite, second side of the shell, wherein separating (130) the annular flange parts occurs in the course of separating the shell.

6. The method of any one of the preceding claims, further comprising:
separating (410) the shell of the multi-part tower section along longitudinal flanges fastened to the shell, wherein separating (130) the annular flange parts occurs in the course of separating the shell, wherein a longitudinal axis of the multi-part tower section is substantially horizontal during separating (410) the shell;
lifting (420) a first partial section of the multi-part tower section that is on top after separation (410) from at least one second partial section of the multi-part tower section that is on the bottom after separation; and
rotating (430) the first partial section about a longitudinal axis of the first partial section to move the first partial section into a flat position, wherein the longitudinal axis of the first partial section is substantially horizontal during the rotation (430) of the first partial section.

7. The method of any one of the preceding claims, wherein the annular flange is connected to the shell at an upper transverse edge of the shell, the method further comprising:
connecting a second, partially cut annular flange to the shell at a lower transverse edge of the shell after partially cutting the second annular flange at dividing locations between annular flange parts of the second annular flange; and
marking a desired longitudinal separation line of the shell extending from a separating location of the first annular flange to an opposite separating location of the second annular flange using the cuts made at the separating locations by the partial cutting.

8. A method (300) for producing a partial section of a multi-part tower section of a tower, the method comprising:
creating (310) alignment holes (250) through a shell of the multi-part tower section along a desired longitudinal separation line (202) of the shell;
aligning (320) a longitudinal flange of the partial section at a first side of the shell along the desired longitudinal separation line of the shell using the alignment holes or using alignment structures fastened to the alignment holes or extending through the alignment holes;
fastening (330) the longitudinal flange of the partial section to the shell of the tower section after the alignment of the longitudinal flange; and
separating (340) the shell along the desired longitudinal separation line from an opposite, second side of the shell.

9. The method of claim 8, wherein separating (340) the shell along the desired longitudinal separation line comprises aligning a separating device using the alignment holes or using alignment structures fastened to the alignment holes or extending through the alignment holes.

10. The method of any one of claims 8 to 9, wherein the alignment holes are drilled holes extending through the shell.

11. The method of any one of claims 8 to 10, further comprising fastening alignment structures to the alignment holes.

12. The method of any one of claims 8 to 11, wherein the alignment structures are steel pins or plastic pins.

13. The method of any one of claims 8 to 12, wherein a distance between adjacent alignment holes along the desired longitudinal separation line is greater than 10cm and less than 2m.

14. The method of any of claims 8 to 13, further comprising:
detachably connecting a longitudinal flange of a second partial section of the tower section to the longitudinal flange of the first partial section after fastening (330) the longitudinal flange of the first partial section to the shell of the multi-part tower section, so that the two adjacent longitudinal flanges are directly in contact with one another along a contact surface; and
fastening the longitudinal flange of the second partial section to the shell of the multi-part tower section after detachably connecting the longitudinal flange of the second partial section to the longitudinal flange of the first partial section.

15. A method (400) for producing a partial section of a multi-part tower section of a tower, the method comprising:
separating (410) a shell of the multi-part tower section along longitudinal flanges fastened to the shell, wherein a longitudinal axis of the multi-part tower section is substantially horizontal during separation of the shell;
lifting (420) a first partial section of the multi-part tower section that is on top after separation (410) from at least a second partial section of the multi-part tower section that is on the bottom after separation (410); and
rotating (430) the first partial section about a longitudinal axis of the first partial section to move the first partial section into a flat position, wherein the longitudinal axis of the first partial section is substantially horizontal during the rotation (430) of the first partial section.

## Revendications

1. Procédé (100) de fabrication d'une section partielle d'une section de tour en plusieurs parties d'une tour, le procédé comprenant le fait de :
couper partiellement (110) une bride annulaire au niveau de points de division entre des parties de bride annulaire de la bride annulaire, de sorte qu'au niveau des points de division, il reste au moins des parties d'une âme de la bride annulaire après la coupe partielle (110), qui lient les parties de bride annulaire les unes aux autres ;
lier (120) la bride annulaire à une coque de la section de tour en plusieurs parties après la coupe partielle (110) de la bride annulaire ; et
séparer (130) les parties de bride annulaire au niveau des points de division en coupant les parties restantes de l'âme après la liaison (120) de la bride annulaire à la coque.

2. Procédé selon la revendication 1, comprenant en outre le fait de séparer la coque de la section de tour en plusieurs parties le long de brides longitudinales (236) fixées à la coque, dans lequel la séparation (130) des parties de bride annulaire est effectuée au cours de la séparation de la coque.

3. Procédé selon l'une des revendications précédentes, comprenant en outre le fait de lier une structure de gabarit à la bride annulaire après la coupe partielle (110) et avant la liaison (120) de la bride annulaire à la coque.

4. Procédé selon la revendication 3, dans lequel la structure de gabarit est une autre bride annulaire ayant au moins partiellement la même configuration de perçage qu'une configuration de perçage de la bride annulaire partiellement coupée.

5. Procédé selon l'une des revendications précédentes, comprenant en outre le fait de :
créer (310) des trous d'alignement à travers la coque de la section de tour en plusieurs parties le long d'une ligne de séparation longitudinale souhaitée de la coque ;
aligner (320) une bride longitudinale (236) de la section partielle sur un premier côté de la coque le long de la ligne de séparation longitudinale souhaitée de la coque à l'aide des trous d'alignement ou à l'aide de structures d'alignement fixées aux trous d'alignement ou s'étendant à travers les trous d'alignement ;
fixer (330) la bride longitudinale de la section partielle à une coque de la section de tour après l'alignement de la bride longitudinale ; et
séparer (340) la coque le long de la ligne de séparation longitudinale souhaitée à partir d'un deuxième côté opposé de la coque, la séparation (130) des parties de bride annulaire étant effectuée au cours de la séparation de la coque.

6. Procédé selon l'une des revendications précédentes, comprenant en outre le fait de :
séparer (410) la coque de la section de tour en plusieurs parties le long de brides longitudinales fixées à la coque, la séparation (130) des parties de bride annulaire étant effectuée au cours de la séparation de la coque, dans lequel un axe longitudinal de la section de tour en plusieurs parties est essentiellement horizontal pendant la séparation (410) de la coque ;
soulever (420) une première section partielle de la section de tour en plusieurs parties, située en haut après la séparation (410), d'au moins une deuxième section partielle de la section de tour en plusieurs parties, située en bas après la séparation ; et
tourner (430) la première section partielle autour d'un axe longitudinal de la première section partielle pour déplacer la première section partielle en position à plat, l'axe longitudinal de la première section partielle étant essentiellement horizontal pendant la rotation (430) de la première section partielle.

7. Procédé selon l'une des revendications précédentes, dans lequel la bride annulaire est liée à la coque au niveau d'un bord transversal supérieur de la coque, le procédé comprenant en outre le fait de :
lier une deuxième bride annulaire partiellement coupée à la coque au niveau d'un bord transversal inférieur de la coque après une coupe partielle de la deuxième bride annulaire au niveau des points de division entre des parties de bride annulaire de la deuxième bride annulaire ; et
marquer une ligne de séparation longitudinale souhaitée de la coque qui s'étend d'un point de séparation de la première bride annulaire à un point de séparation opposé de la deuxième bride annulaire à l'aide des découpes créées aux points de séparation par la coupe partielle.

8. Procédé (300) de fabrication d'une section partielle d'une section de tour en plusieurs parties d'une tour, le procédé comprenant le fait de :
créer (310) des trous d'alignement (250) à travers une coque de la section de tour en plusieurs parties le long d'une ligne de séparation (202) longitudinale souhaitée de la coque ;
aligner (320) une bride longitudinale de la section partielle sur un premier côté de la coque le long de la ligne de séparation longitudinale souhaitée de la coque à l'aide des trous d'alignement ou à l'aide de structures d'alignement fixées aux trous d'alignement ou s'étendant à travers les trous d'alignement ;
fixer (330) la bride longitudinale de la section partielle à la coque de la section de tour après l'alignement de la bride longitudinale ; et
séparer (340) la coque le long de la ligne de séparation longitudinale souhaitée d'un deuxième côté opposé de la coque.

9. Procédé selon la revendication 8, dans lequel la séparation (340) de la coque le long de la ligne de séparation longitudinale souhaitée comprend le fait d'aligner un dispositif de séparation à l'aide des trous d'alignement ou à l'aide de structures d'alignement fixées aux trous d'alignement ou s'étendant à travers les trous d'alignement.

10. Procédé selon l'une des revendications 8 à 9, dans lequel les trous d'alignement sont des trous de forage qui s'étendent à travers la coque.

11. Procédé selon l'une des revendications 8 à 10, comprenant en outre le fait de fixer des structures d'alignement aux trous d'alignement.

12. Procédé selon l'une des revendications 8 à 11, dans lequel les structures d'alignement sont des goupilles en acier ou des goupilles en plastique.

13. Procédé selon l'une des revendications 8 à 12, dans lequel une distance entre des trous d'alignement voisins le long de la ligne de séparation longitudinale souhaitée est supérieure à 10 cm et inférieure à 2 m.

14. Procédé selon l'une des revendications 8 à 13, comprenant en outre le fait de :
lier de façon détachable une bride longitudinale d'un deuxième section partielle de la section de tour à la bride longitudinale de la première section partielle après la fixation (330) de la bride longitudinale de la première section partielle à la coque de la section de tour en plusieurs parties, de sorte que les deux brides longitudinales voisines sont en contact direct l'une avec l'autre le long d'une surface de contact ; et
fixer la bride longitudinale de la deuxième section partielle à la coque de la section de tour en plusieurs parties après avoir lié de façon détachable la bride longitudinale de la deuxième section partielle à la bride longitudinale de la première section partielle.

15. Procédé (400) de fabrication d'une section partielle d'une section de tour en plusieurs parties d'une tour, le procédé comprenant le fait de :
séparer (410) une coque de la section de tour en plusieurs parties le long de brides longitudinales fixées à la coque, dans lequel un axe longitudinal de la section de tour en plusieurs parties est essentiellement horizontal pendant la séparation de la coque ;
soulever (420) une première section partielle de la section de tour en plusieurs parties, située en haut après la séparation (410), d'au moins une deuxième section partielle de la section de tour en plusieurs parties, située en bas après la séparation (410) ; et
tourner (430) la première section partielle autour d'un axe longitudinal de la première section partielle pour déplacer la première section partielle en position à plat, l'axe longitudinal de la première section partielle étant essentiellement horizontal pendant la rotation (430) de la première section partielle.
